# EUROPÄISCHE PATENTANMELDUNG

(11) **EP 2 381 551 A2**
(43) Veröffentlichungstag der Anmeldung: **26.10.2011**
(21) Anmeldenummer: 11163224.6
(22) Anmeldetag: 20.04.2011
(51) Int. Cl.: H02G 3/04

(54) **Flexibles Kabelschutzrohr**

(30) Priorität: 20.04.2010 CH 5702010
(71) Anmelder: Elkuch, Roland, 9488 Schellenberg (LI)
(72) Erfinder: Elkuch, Roland, 9488, Schellenberg (LI)
(74) Vertreter: Hasler, Erich

(57) **Zusammenfassung**

Rohrsegment (13) zum Aufbau von Schutzrohren oder Schutzrohrabschnitten mit Rastorganen (19) zum Einrasten benachbarter Segmente beinhaltend zumindest einen ersten Segmentbereich (15) mit einem Segmentinnendurchmesser, einen zweiten Segmentbereich (17) mit einem Segmentaussendurchmesser, einen zwischen erstem und zweitem Segmentbereich liegenden Übergangsbereich (27), eine erste Dichtfläche (25) an der inneren Mantelfläche des ersten Segmentbereichs (15), eine zweite Dichtfläche (30) an der äusseren Mantelfläche des zweiten Segmentbereichs (17), wobei die Dichtflächen derart angeordnet sind, dass im eingerasteten Zustand erste und zweite Dichtflächen zweier benachbarter Segmente einander gegenüberliegend berühren, ein oder mehrere Rastorgane (19), welche in Achsrichtung (23) in Verlängerung des Segments (13) angeordnet sind, wenigstens eine Hinterschneidung (21) für den Eingriff des mindestens einen Rastorgans (19) eines benachbarten Segments (13) und einen im Übergangsbereich (27) liegenden und an die Hinterschneidung (21) anschliessenden zur Segmentachse parallelen, kreiszylindrischen Mantelbereich (29), wobei die erste und zweite Dichtflächen (25, 30) als in Segmentachsrichtung (23) gekrümmte Flächen mit im Wesentlichen gleichen Krümmungsradien ausgeführt sind.

Schutzrohr oder Schutzrohrabschnitt (11) beinhaltend ineinander eingerastete Rohrsegmente (13, 13') mit einer axialen und einer uneingeschränkt rotatorischen Beweglichkeit der Rastorgane (19) eines benachbarten Segmentes (13') in Bezug auf Achse und Umfang des Rohrsegments (13).

## Beschreibung

### Gebiet der Erfindung

Die Erfindung betrifft eine Rohrsegment zum Aufbau von Schutzrohren oder Schutzrohrabschnitten gemäss Oberbegriff des Anspruchs 1 und ein Schutzrohr oder Schutzrohrabschnitt beinhaltend ineinander eingerastete Rohrsegmente gemäss Anspruch 22. Diese Rohre kommen als Schutzhüllen für Kabel im Erdreich oder Beton zum Einsatz. Bei dieser Anwendung sind Dichtheit gegen das Eindringen von Wasser, leichte Montierbarkeit und gute Verbiegeflexibilität über weite Biegeradien gefragt. Zusätzlich übernehmen die Schutzhüllen eine Stützfunktion gegenüber der Umgebung.

### Stand der Technik

Heute verwendete Rohre sind oft aus Segmentstücken aufgebaut, welche die nötige Flexibilität gewährleisten. Bekannte Rohre gemäss dem europäischen Patent EP 0 676 840 weisen sich angeblich durch eine gute Dichtheit bis etwa 0.2 bar Überdruck aus oder bis 4 bar, wenn zusätzliche O-Ringe verwendet werden. Die Rohrsegmente dieser Rohre beinhalten Rastorgane für das Verrasten benachbarter Segmente und eine Ausnehmung für das Einrasten der Rastorgane, wobei in verrastetem Zustand ein axiales und tangentiales Spiel der Haken der Rastorgane bestehen bleibt.

In der Praxis hat sich jedoch gezeigt, dass die Rohre nicht in allen Stellungen und Biegegraden diese guten Dichtheitswerte erzielen. Insbesondere stellte sich heraus, dass Betonschlacke beim Einfüllen und Verdichten in verrasteten Rohrabschnitte eindringen kann. Es hat sich auch gezeigt, dass einzelne Segmente in der Montagepraxis ausrasten und die Rohre auseinanderspringen.

Es besteht daher ein Bedarf an noch besser dichtenden, biegbaren Rohren.

### Aufgabe der Erfindung

Es ist die Aufgabe der vorliegenden Erfindung ein Schutzrohr, bezugsweise einen Rohrabschnitt für Kabel bereitzustellen, das bzw. der biegbar, leicht montierbar und wasserdicht ist. Insbesondere sollen Segmente für ein Schutzrohr oder einen Rohrabschnitt bereitgestellt werden, die dem Schutzrohr oder dem Rohrabschnitt hinreichend Flexibilität, gute Montierbarkeit und Dichtheit verleihen.

### Beschreibung

Erfindungsgemäss wird die Aufgabe mit einem Rohrsegment gemäss dem ersten Anspruch und einem Schutzrohr oder Schutzrohrabschnitt gemäss dem Anspruch 22 gelöst.

Erfindungsgemäss beinhaltet ein Rohrsegment zum Aufbau von Schutzrohren oder Schutzrohrabschnitten mit Rastorganen zum Einrasten benachbarter Segmente zumindest
- einen ersten Segmentbereich mit einem Segmentinnendurchmesser,
- einen zweiten Segmentbereich mit einem Segmentaussendurchmesser,
- einen zwischen erstem und zweitem Segmentbereich liegenden Übergangsbereich,
- eine erste Dichtfläche an der inneren Mantelfläche des ersten Segmentbereichs,
- eine zweite Dichtfläche an der äusseren Mantelfläche des zweiten Segmentbereichs, wobei die Dichtflächen derart angeordnet sind, dass im eingerasteten Zustand erste und zweite Dichtflächen zweier benachbarter Segmente einander gegenüberliegend berühren,
- ein oder mehrere Rastorgane, welche in Achsrichtung in Verlängerung des Segments angeordnet sind,
- wenigstens eine Hinterschneidung für den Eingriff des mindestens einen Rastorgans eines benachbarten Segments,
- einen im Übergangsbereich liegenden und an die Hinterschneidung anschliessenden zur Segmentachse parallelen, kreiszylindrischen Mantelbereich, und ist dadurch gekennzeichnet, dass die erste und zweite Dichtfläche als in Segmentachsrichtung gekrümmte Flächen mit im Wesentlichen gleichen Krümmungsradien ausgeführt sind.

Aufgrund der gleichen Krümmungsradien der ersten und zweiten Dichtfläche lassen sich die erfindungsgemässen Rohrsegmente einfach zusammenstecken und bilden eine wasserdichte Abdichtung des Rohrinnenraums. Die Dichtflächen der Rohrsegmente halten einem Druckunterschied zwischen dem Rohrinnern und dem Rohräussern von mindestens 0.5 bar stand. Das Rohr lässt sich trotzdem mit geringem Kraftaufwand in die gewünschte Form biegen, wiedersteht aber dem Eindringen von Betonschlacke und hat eine verringerte Tendenz auseinander zu springen. Insbesondere halten die Dichtflächen der Rohrsegmente in allen einnehmbaren gegenseitigen Stellungen dicht.

Der im Übergangsbereich liegende und an die Hinterschneidung anschliessende zur Segmentachse parallele, kreiszylindrische Mantelbereich, bewirkt eine axiale und eine uneingeschränkte tangentiale oder rotatorische Beweglichkeit der Rastorgane eines benachbarten Segmentes (und somit des Nachbarsegments selbst) in Bezug auf Achse und Umfang des Rohrsegments. Die gegenseitige Rotation zweier benachbarter Rohrsegmente wird in der erfindungsgemässen Ausführung durch die Rastorgane nicht behindert und gewährt somit eine komfortablen Montage.

Vorteihafterweise besitzen die erste und zweite Dichtfläche im Wesentlichen gleiche Krümmungsradien mit einem Toleranzbereich von einigen zehntel Millimeter, insbesondere bis zu 0.05 mm, vorzugsweise bis zu 0.01 und weiter bevorzugt bis zu 0.001 mm akzeptierbar.

Zweckmässigerweise weist das oder die Rastorgane in Umfangsrichtung um vorzugsweise gleiche Winkelabstände zueinander versetzte, elastische, nasenförmige Haken auf. Durch eine gleichmässige Verteilung der Rastorgane um die Segmentringachse wird eine gleichmässig gute Einrastung zweier benachbarter Rohrsegmente erzielt.

Vorteilhafterweise besitzt der nasenförmige Haken eine Stosszone, welche sich in einem spitzen Winkel in Bezug auf die Segmentlängsachse zum Ende des Rastorgans hin verjüngt. Ein lokal zu starkes Zusammenstecken der Segmente wird durch die Stosszone verhindert. Dadurch wiederum wird eine Aufhebung der Dichtheit bei starkem Ineinanderpressen der Segmente verhindert.

Bevorzugt sind Rastorgan und Hinterschneidung an jeweils entgegengesetzten Segmentseiten, d.h. der Segmentinnenseite und der Segmentaussenseite, angeordnet, sodass im eingerasteten Zustand Rastorgan und Hinterschneidung zweier benachbarter Segmente ineinander greifen.

Zweckmässigerweise liegen die Kreismittelpunkte der Krümmungsradien der Dichtflächen im Wesentlichen auf der Segmentachse. Diese Ausgestaltung erlaubt eine kugelgelenkartige gegenseitige Verdrehung oder Knickung der Segmentachsen zweier ineinander gerasteter Segmente, ohne dass der Druckkontakt der Dichtflächen verloren geht. Die Dichtflächen bleiben auch beim Verdrehen und Knicken parallel und in Kontakt zueinander. Die Dichtheit bleibt also beim Knicken eines Rohrabschnitts erhalten.

Vorzugsweise ist im nicht eingerasteten Zustand der grösste Innendurchmesser des ersten Segmentbereichs entweder kleiner oder gleich ist wie der grösste Aussendurchmesser des zweiten Segmentbereichs, sodass beim Einrasten eine Vorspannung, insbesondere eine Druckspannung entsteht. Bevorzugt ist der Innendurchmesser des ersten Segmentbereichs 0.0 mm bis 1.0 mm, weiter bevorzugt 0.2 mm bis 0.8 mm, und besonders bevorzugt 0.3 mm bis 0.6 mm kleiner als der Aussendurchmesser des zweiten Segmentbereichs. Die Vorspannung erhöht die Dichtungswirkung. Dies wirkt sich unter Anwendung positiv aus, insbesondere wenn zum Beispiel von aussen Drücke auf die Segmente einwirken

Bevorzugt bildet die erste Dichtfläche eine konkav gekrümmte Fläche und die zweite Dichtfläche eine konvex gekrümmte Fläche.

Weiter bevorzugt leitet der Übergangsbereich zwischen mittels zunehmendem Durchmesser den zweiten Segmentbereich in den ersten Segmentbereich über. Die zwei Segmentbereiche mit Dichtflächen sind also so angeordnet, dass der erste und der zweite Segmentbereich zweier Segmente beim Zusammenstecken ineinander greifen und somit verrasten können.

Vorteilhafterweise ist die die Hinterschneidung zwischen dem zweiten Segmentbereich und dem Übergangsbereich angeordnet.

Bevorzugterweise weist der Übergangsbereich Unterabschnitte auf, wobei ein erster Unterabschnitt aus dem kreiszylindrischen Mantelbereich, ein anschliessender zweiter Unterabschnitt aus einem sich zum ersten Segmentbereich hin radial weitenden Mantelbereich mit einem ersten Neigungswinkel und optional ein dem zweiten Unterabschnitt anschliessender dritter Unterabschnitt aus einem sich zum ersten Segmentbereich hin radial weitenden Mantelbereich mit einem zweiten Neigungswinkel besteht.

Bevorzugt ist, dass der spitze Winkel der Stosszone des Hakens gleich dem ersten Neigungswinkel. Der Haken des Rastorgans liegt hierbei auf der Segmentinnenseite. Im eingerasteten Zustand liegt der Haken des Rastorgans eines Segments parallel zum Neigungswinkel zum zweiten Unterabschnitt. Haken und Unterabschnitt können sich unter Anwendungsbedingungen berühren; dabei wird die weitere Verschiebung der beiden Segmente gestoppt.

Vorteilhaft ist, dass der zweite Neigungswinkel grösser als der ersten Neigungswinkel ist. Der dritte Unterabschnitt wirkt somit als weiteres Stoppelement.

Vorzugsweise beschreibt die erste Dichtfläche einen Kreisbogen zwischen Rastorgan und Übergangsbereich, wobei der von der Segmentachse am weitesten entfernte Punkt des Bogens im mittleren Bogenbereich, d.h. etwa auf halber Länge des Bogens, liegt.

Vorzugsweise beschreibt die zweite gekrümmte Dichtfläche einen Kreisbogen zwischen Segmentanfang des zweiten Segmentbereichs und der Hinterschneidung, wobei der von der Segmentachse am weitesten entfernte Punkt des Bogens im mittleren Bogenbereich, d.h. etwa auf halber Länge des Bogens, liegt.

Zweckmässigerweise sind die Rastorgane als einzelne Abschnitte ausgebildet, die das Rohrsegment in Achsrichtung eine bestimmte Distanz überragen. Die Rastorgane sind bevorzugt dem ersten Segmentbereich abstehend angeformt.

Vorteilhafterweise ist die Hinterschneidung um den gesamten Umfang des Rohrsegments durchgehend ausgebildet, insbesondere bevorzugt um den gesamten Aussenumfang des Rohrsegments. Die Rotation der Segmente um die gesamte eigene Achse ist dadurch möglich.

Vorteilhafterweise ist im Bereich einer der Dichtflächen eine Ringnut für die Aufnahme eines Dichtungsringes vorgesehen. Weiter bevorzugt ist die Ringnut im mittleren Bereich der Dichtfläche bezogen auf die Segmentlängsachse angeordnet. Bevorzugterweise besteht die Ringnut aus einer Einkerbung in der Dichtfläche. Eine zusätzliche Dichtung kann den Dichtegrad der verrasteten Segmente weiter steigern. Die Zonen zweier aufeinander gepresster Dichtflächen und die Zone mit auf eine Dichtfläche aufgepresstem Dichtungsring dichten gleichzeitig. Abhängig von den Umwelteinflüssen während der Anwendung kann die eine oder andere Zone besser abdichtend wirken. Vorteilhafterweise gelangt für den Dichtungs- bzw. O-Ring ein Moosgummi zum Einsatz.

Bevorzugt ist das Rohrsegment aus Kunststoff, vorzugsweise Polyethylen, insbesondere Hochdruck-Polyethylen, gegebenenfalls aber Hartpolypropylen, spritzgussgefertigt.

Ein Schutzrohr oder Schutzrohrabschnitt aufgebaut aus erfindungsgemässe ineinander eingerasteter Rohrsegmente bietet eine axiale und eine uneingeschränkte tangentiale oder rotatorische Beweglichkeit der Rastorgane eines benachbarten Segmentes (und somit des Nachbarsegments selbst) in Bezug auf Achse und Umfang des Rohrsegments.

Nachfolgend wird die Erfindung unter Bezugnahme auf die Figuren in schematischer Darstellung näher im Detail beschrieben. Es zeigt:
- Figur 1:: Schnitt in Achsrichtung zweier ineinander eingerasteter Rohrsegmente gemäss vorliegender Erfindung;
- Figur 2:: Teilansicht der Schnitts des oberen Bereichs in Figur 1;
- Figur 3:: (a) Teilansicht der Schnitts des unteren Bereichs in Figur 1; (b) Teilansicht der Schnitts des unteren Bereichs in Figur 1
- Figur 4:: Seitenansicht eines einzelnen Rohrsegments;
- Figur 5:: (a) Schnitt in Achsrichtung eines einzelnen Rohrsegments und (b) entsprechender Ansicht von oben;
- Figur 6:: Zwei perspektivische Ansichten eines erfindungsgemässen Rohrsegments;

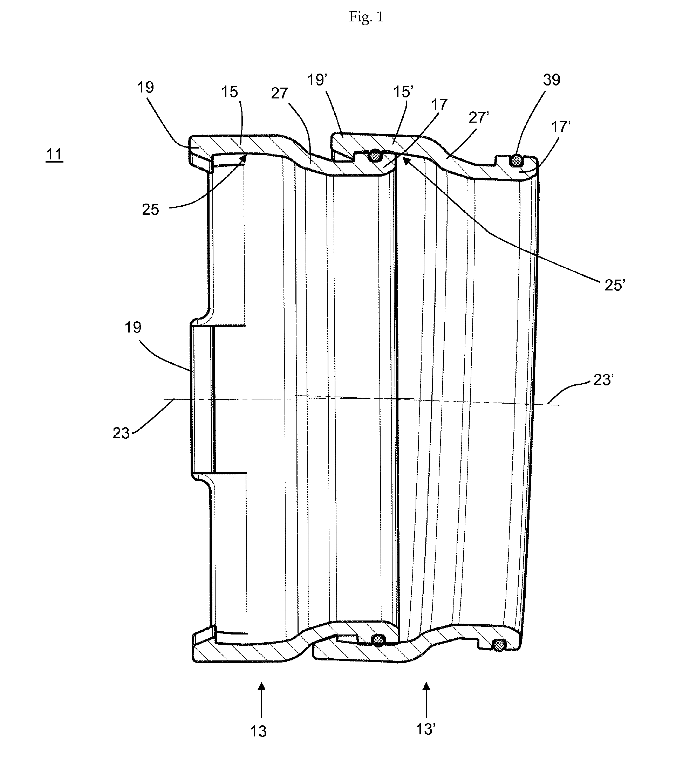

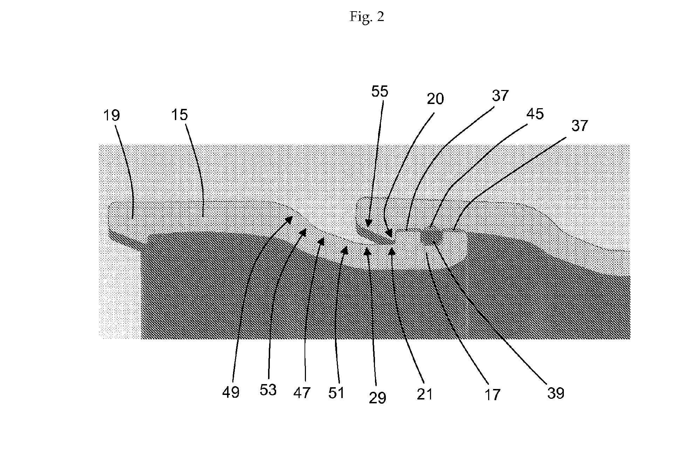

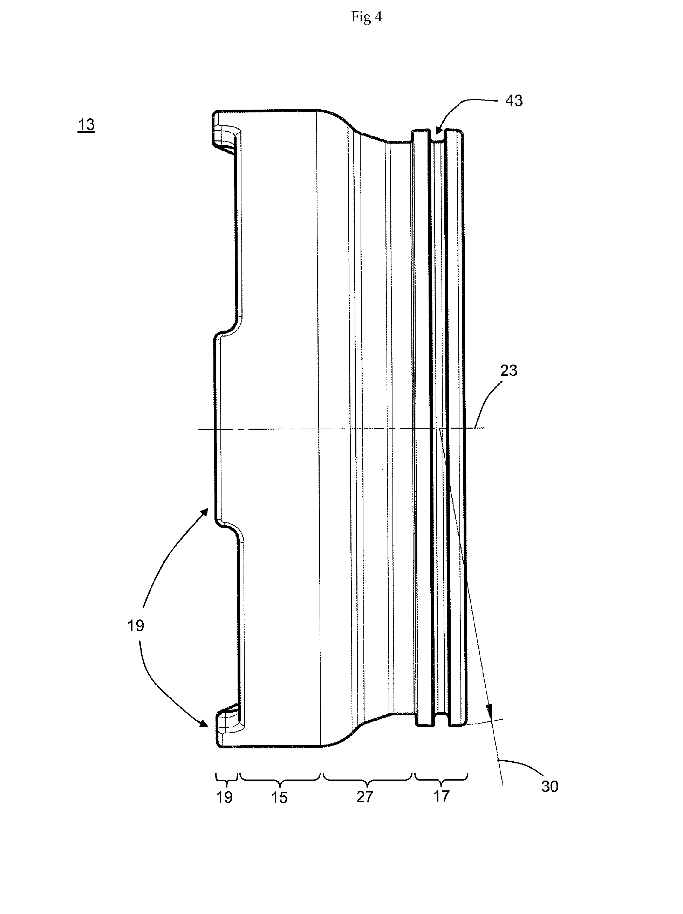

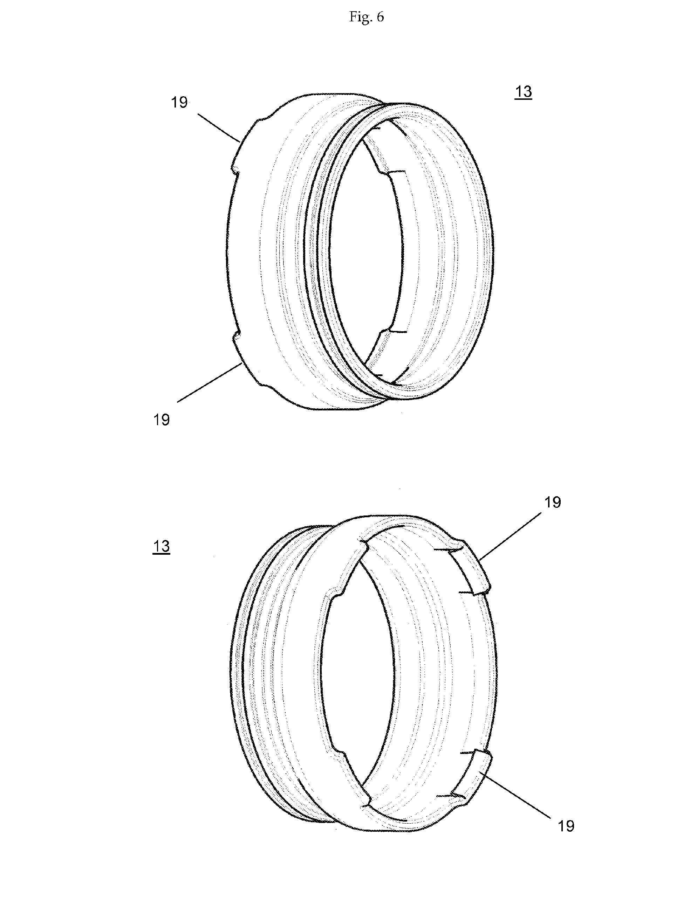

Figur 1 zeigt eine exemplarische Ausführung eines Rohrabschnitts 11 mit zwei ineinander gerasteten Rohrsegmenten 13, 13'. In den Figuren 2 bis 6 werden Details und andere Ansichten und Schnitte zur Ausführung gezeigt. Im Folgenden bedeutet gleiche Nummerierung, dass die entsprechenden Elemente identisch sind. Ein zusätzliches Apostroph weist auf ein mehrfaches Vorhandensein des selben Elements in derselben Figur und dient gegebenenfalls zur Unterscheidung der identischen Elemente.

In Figuren 1 bis 3 sind zwei identische Rohrsegmente 13 und 13' durch Verbindung von zwei unterschiedlichen aber komplementären Segmentbereichen 15' und 17 des jeweiligen Rohrsegments zu einem Rohrabschnitt 11 zusammengesteckt. Hierzu werden die zwei Segmente 13 und 13' mit ihren unterschiedlichen Segmentbereichen 15, 15', 17 und 17 gegeneinander gerichtet ineinander gepresst. Aufgrund der hakenartigen Rastorgane 19 in einem ersten Segmentbereich 15' und der Hinterschneidung 21 in einem zweiten Segmentbereich 17 verrasten die beiden Segmente 13 und 13'und können nur mehr schwer auseinander genommen werden.

Die einzelnen Segmente 13 sind achssymmetrisch und grösstenteils kreis- oder ringförmig. Der längsgerichtete Querschnitt eines Segments 13 wie in den Figuren 1-3 und 5(a) gezeigt weist drei, gegebenenfalls vier Teilbereiche auf. Ein Segmentbereich besteht aus dem Rastorgan 19. Dieser Bereich ist nasenförmig ausgebildet und steht als Ausstülpung vom Hauptteil des Segments ab. Der Bereich des Rastorgans endet im Wesentlichen an der Hakenspitze 20 und geht in den ersten Segmentbereich 15 über. Der erste Segmentbereich 15 weist auf der Innenfläche 25 eine Krümmung entlang der Segmentachslängsrichtung 23 auf. Der Kreismittelpunkt der Krümmung liegt vorteilhafterweise auf der Segmentachse 23. Dieser erste Segmentbereich 15 geht in einen Übergangsbereich 27 über, der an einer gleichzeitigen Verringerung des äusseren und inneren Radius des Segments 13 zu erkennen ist und mit einer zylindrischen Mantelaussenfläche 29 an der Hinterschneidung 21 endet. Der zweite Segmentbereich 17 wird durch einen verdickten Endbereich gebildet. Der zweite Segmentbereich 17 besteht im Wesentlichen aus einer gekrümmten Aussenfläche 30, deren eine Krümmung entlang der Segmentachslängsrichtung 23 verläuft und vorteilhafterweise auf der Segmentachse 23 seinen Kreismittelpunkt hat. Der zweite Segmentbereich 17 wird zum Übergangsbereich hin durch die Hinterschneidung 21 begrenzt. Der Krümmungsradius der Aussenfläche 30 des zweiten Segmentbereichs 17 entspricht vorteilhafterweise dem Krümmungsradius der Innnenfläche 25 des ersten Segmentbereichs 15. Optional kann die Aussenfläche 30 eine Nut zur Einlage einer Dichtung 39 enthalten.

Die Rastorgane 19 bilden eine Art Ausstülpung in Verlängerung des Segments 13 parallel zur Segmentlängsachse 23, Figuren 1-3, 5 und 6. Die Ausstülpung ist auf einen oder mehrere Teilbereiche des Segmentumfangs beschränkt. Vorteilhafterweise sind mehrere Ausstülpungen oder Rastorgane 19 gleichmässig auf dem Segmentring 13 verteilt. Vorzugsweise sind vier Rastorgane mit einem Winkelversatz von ungefähr 90 Grad vorhanden. Die vier einzelnen Rastorgane 19 breiten sich hierbei auf einem bevorzugten Winkelbereich von bis zu 45 Grad und weiter bevorzugt bis zu 30 Grad aus. Die Rastorgane sind hakenförmig ausgebildet, wobei die Hakenspitze 20 zum Segmentinnern gerichtet ist. Von der Hakenspitze 20 bis nahe dem äussersten Ende des Rastorgans 19 liegt eine Rastorganseitenfläche 55 mit konstantem Neigungswinkel relativ zur Segmentlängsachse vor.

Das Rastorgan 19 (im speziellen 19' in Figur 1), insbesondere der Haken 20 des Rastorgans, verhakt mit oder rastet in die Hinterschneidung 21 eines benachbarten Segments 13. Die Hinterschneidung 21 an der Segmentaussenseite 13 ist vorteilhafterweise um den Umfang des gesamten Segments 13 herumgeführt. Dadurch können sich die zwei ineinander verhakten Segmente 13 und 13' rotatorisch verschieben bzw. verdrehen. Die Hinterschneidung 21 am Übergang vom zweiten Segmentbereich 17 zum Übergangsbereich 27 grenzt an die zylindrische Mantelfläche 29, die definitionsgemäss parallel zur Rohrsegmentlängsachse 23 verläuft. Dadurch, dass an die Hinterschneidung 21 ein zylindrisches Flächenstück anschliesst, können sich die Rastorgane 19 eines verhakten Segments 13 in segmentaxsialer Richtung verschieben.

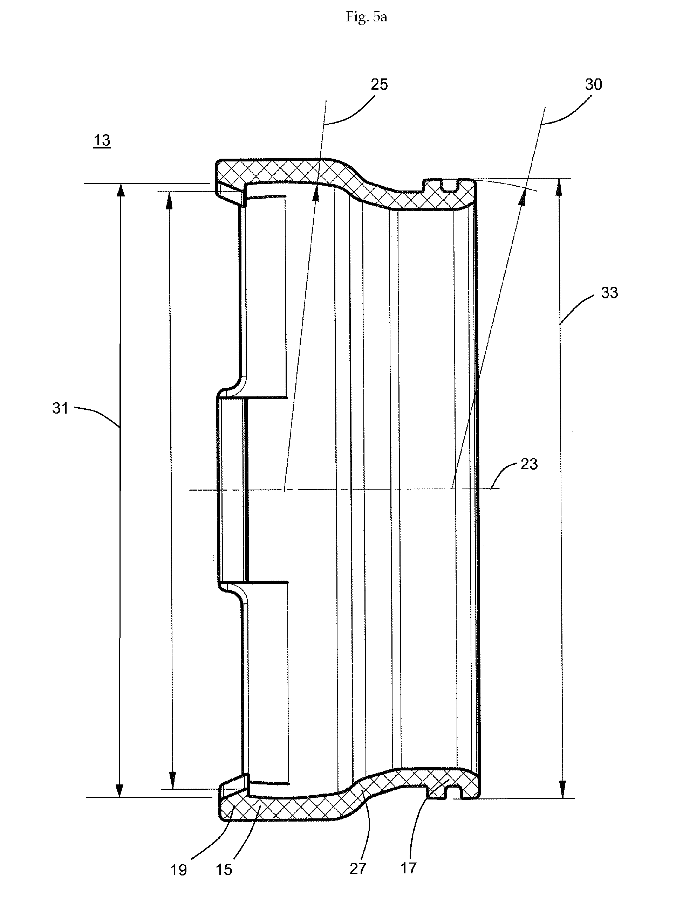

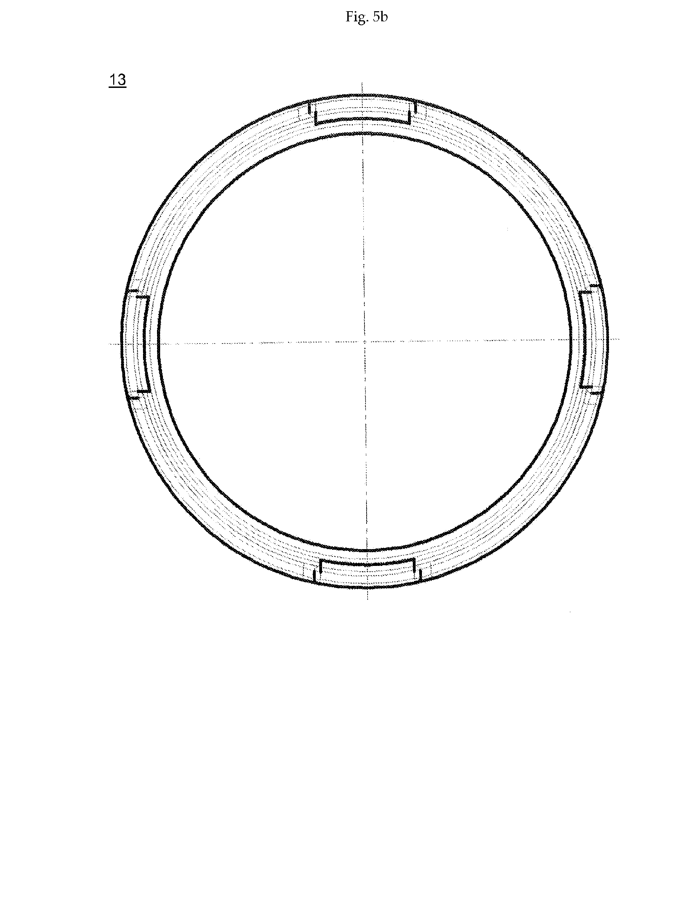

Im nicht eingerasteten Zustand, also im spannungslosen Zustand, ist der maximale Innendurchmesser 31 eines Segments 13 im weiteren ersten Segmentbereich 15 vorteilhafterweise etwas kleiner, insbesondere um einige zehntel Millimeter kleiner, als der maximale Aussendurchmesser 33 im engeren zweiten Segmentbereich 17 (Figur 5 (a)). Dadurch besteht im zusammengesteckten und verrasteten, bezugsweise eingerasteten Zustand eine Spannung in den zwei sich berührenden Segmentbereichen 15' und 17, insbesondere an den entsprechenden sich berührenden Oberflächen 25, bzw. 25' und 30. Die elastische Verformung im zusammengebauten Zustand wird in den Figuren 1-3 dadurch verdeutlicht, dass die theoretischen Überlappung 37 an den Druckflächen 25 und 30 von Teilbereichen zweier Rohrsegmente 13 gemäss deren Abmessungen im spannungslosen Zustand aufgezeigt wird. Im reell zusammengerasteten Zustand würden sich die ersten und zweiten Segmentbereiche 15 und 17 aufweiten, bezugsweise verengen und/oder es würde sich das Material lokal an den Druckstellen elastisch und/oder plastisch verändern. Hierbei wird vorteilhafterweise ein Material verwendet, das sich unter den gegebenen Drücken zwar elastisch aber möglichst nicht plastisch verformt. Ein optionaler O-Ring 39, der mittig im zweiten Segmentbereich in einer optionalen Nut 43 liegt, verformt sich ebenfalls. Diese Verformung des O-Rings ist ebenfalls als Überlappung 45 in den Figuren 1-3 dargestellt. Die unter Spannung stehenden und elastisch verformten Flächen 25 und 30 dichten den Segmentverbund erfindungsgemäss um den gesamten Segmentumfang effektiv ab und werden daher im Folgenden Dichtflächen 25 und 30 genannt. Der optional eingesetzte O-Ring bietet eine zusätzliche Sicherheit. Insbesondere kann der O-Ring, der üblicherweise aus einem anderen Material besteht, die Dichtung bei sich verändernden Umweltbedingungen, wie z.B. bei Temperaturschwankungen, verbessern.

Die gesamte erste Dichtfläche 25 besteht aus einer konkav gekrümmten Ringbandfläche mit einer Spannweite, die grösser ist als die Spannweite der zweiten Dichtfläche 30, die die Form eines konvex gekrümmten Ringbandfläche hat. Das Mass, um welches die Spannweite der erste Dichtfläche 25 grösser ist als die Spannweite der zweiten Dichtfläche 30, bestimmt die axiale Verbiegbarkeit der Rohrsegmente im eingerasteten Zustand. Vorzugsweise ist die Spannweite der ersten Dichtfläche 25 ungefähr doppelt so gross wie jene der zweiten Dichtfläche 30.

Optional ist die erste oder zweite Dichtfläche durch eine Nut zur Aufnahme eines abdichtenden Rings in zwei Dichtflächenteile aufgetrennt. Gemäss der vorliegenden Figurenbeispiele ist die zweite Dichtfläche 30 mit einer Nut 43 zur Aufnahme eines Dichtungsrings 39, wie z.B. eines O-Rings, ausgestattet. Zweckmässigerweise ist die Dichtfläche mit der grösseren Spannweite mit einem Dichtungsring 39 ausgestattet.

Um die axiale Verschiebbarkeit der Rohrsegmente 13 und 13' im eingerasteten Zustand zu gewährleisten, weist der Übergangsbereich 27 auf der Segmentaussenseite zweckmässigerweise einen kreiszylindrischen Mantelabschnitt 29 auf. Die Länge des kreiszylindrischen Abschnitts 29 entspricht dabei vorteilhafterweise dem Mass, um welches die Spannweite der ersten Dichtfläche 25 grösser ist als die Spannweite der zweiten Dichtfläche 30. Dadurch kann die gesamte Spannweite der ersten Dichtfläche 25 mit der zweiten Dichtfläche 30 bei Verschiebung überstrichen werden.

Der Übergangsbereich 27 gemäss Figuren 1-6 beinhaltet neben dem ersten zylindrischen Mantelabschnitt 29 einen zweiten und dritten Mantelabschnitt 47 und 49. Der zweite und dritte Mantelabschnitt unterscheiden sich von dem zylindrischen Mantelabschnitt 29 dadurch, dass in beiden Abschnitten 47 und 49 der Radius mit dem Abstand zum zylindrischen Mantelabschnitt 29 zunimmt. Wobei im zweiten Abschnitt 47 der Radius mit dem Abstand gleichmässig mit einer konstanten Steigung zunimmt und im dritten Abschnitt 49 der Radius mit dem Abstand zum zylindrischen Mantelabschnitt 29 erst mit einer konstanten Steigung und dann mit sich verringernder Steigung zunimmt bis der Abschnitt in den ersten Segmentbereich 15 übergeht, welcher an der Mantelfläche im Wesentlichen zylindrisch ausgebildet ist. Die Abschnitte 47 und 49 weisen unterschiedliche Neigungswinkel gegenüber der Segmentlängsachse auf. Insbesondere sind beide Abschnitte mit Bezug zum zylindrischen Mantelabschnitt 29 geneigt. Dabei ist der Neigungswinkel des zweiten Abschnitts 47 geringer als der anfängliche Neigungswinkel des dritten Abschnitts 49. Es entsteht also ein erster konkaver Knickpunkt 51 zwischen dem ersten zylindrischen Mantelabschnitt und dem zweiten Mantelabschnitt 47 sowie ein zweiter konkaver Knickpunkt 53 zwischen dem zweiten Mantelabschnitt 47 und dem dritten Mantelabschnitt 49 des Übergangsbereichs 27.

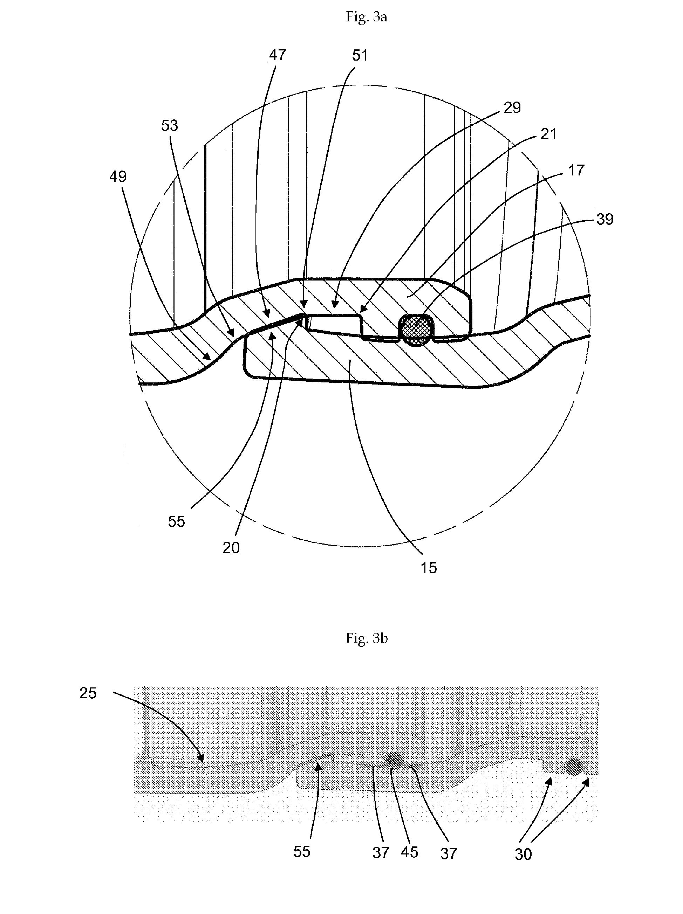

Gemäss Figur 3 (Figuren 3 (a) und (b)) entspricht die Neigung des zweiten Mantelabschnitts 47 im Wesentlichen jener der Rastorganseitenfläche 55 und entspricht die Länge des zweiten Mantelabschnitts 47 vorteilhaft im Wesentlichen der Länge der geneigten Rastorganseitenfläche 55. Wie in Figur 3 ersichtlich, funktioniert der zweite Mantelabschnitt 47 als Rutschstopp für die zwei Rohrsegmente 13, 13. Dadurch, dass die Neigung des zweiten Mantelabschnitts 47 im Wesentlichen jenem der anliegenden Seite 55 des Rastorgans 19 entspricht, bilden die zwei sich anpressenden Flächen unter Druck eine rutschfeste Anordnung. Im Weiteren wird ein Weiterrutschen unter Aufweitung des Segmentdurchmessers im Bereich der Rastorgane 19 durch das vorteilhafte Vorhandensein des dritten Mantelabschnitts 49 verhindert. Im zweiten Knickpunkt 53 wird ein Verrutschen wirksam dadurch verhindert, dass die Steigung der Mantelfläche 49 ab hier weiter zunimmt.

Diese oben genannte Abmessungsmerkmalen erlauben im eingerasteten Zustand eine Verschieben der beiden Segmente gegeneinander, die ein Biegen der beiden Segmentachsen gegeneinander und/oder ein Verdrehen um die Segmentlängsachsen bedeutet. Hierdurch kann die Form eines Rohrabschnitts justiert werden. Gleichzeitig ist die Abdichtung des Rohrabschnittinnenraums gegen Aussen gewährt. Ein Überrutschen der eingerasteten Rohrsegmente wird durch eine Rutschstoppfläche 55 am Rastorgan 19 und gegebenenfalls die weitere Aufweitung des Segmentumfangs am Knickpunkt 53 verhindert.

### Legende:

- 11: Rohrabschnitt
- 13: Rohrsegment
- 15: Erster Segmentbereich
- 17: Zweiter Segmentbereich
- 19: Rastorgan
- 20: Haken
- 21: Hinterschneidung
- 23: Rohrsegmentlängsachse
- 25: Erste Dichtfläche, gekrümmte Innenfläche (Radius)
- 27: Übergangsbereich
- 29: Zylindrische Mantelfläche
- 30: Zweite Dichtfläche, gekrümmte Aussenfläche (Radius)
- 31: Maximaler Innendurchmesser des ersten Segmentbereichs
- 33: Maximaler Aussendurchmesser im zweiten Segmentbereich
- 37: Überlappungsbereich von erster und zweiter Dichtungsfläche
- 39: Dichtungsring
- 43: Nut
- 45: Überlappungsbereich des Dichtungsrings mit der ersten Dichtungsfläche
- 47: Zweiter Mantelabschnitt des Übergangsbereichs
- 49: Dritter Mantelabschnitt des Übergangsbereichs
- 51: Erster Knickpunkt des Übergangsbereichs
- 53: Zweiter Knickpunkt des Übergangsbereichs
- 55: Rutschstoppfläche, auch Rastorganseitenfläche, Stosszone

## Patentansprüche

1. Rohrsegment (13) zum Aufbau von Schutzrohren oder Schutzrohrabschnitten mit Rastorganen (19) zum Einrasten benachbarter Segmente beinhaltend zumindest
- einen ersten Segmentbereich (15) mit einem Segmentinnendurchmesser,
- einen zweiten Segmentbereich (17) mit einem Segmentaussendurchmesser,
- einen zwischen erstem und zweitem Segmentbereich liegenden Übergangsbereich (27),
- eine erste Dichtfläche (25) an der inneren Mantelfläche des ersten Segmentbereichs (15),
- eine zweite Dichtfläche (30) an der äusseren Mantelfläche des zweiten Segmentbereichs (17), wobei die Dichtflächen derart angeordnet sind, dass im eingerasteten Zustand erste und zweite Dichtflächen zweier benachbarter Segmente einander gegenüberliegend berühren,
- ein oder mehrere Rastorgane (19), welche in Achsrichtung (23) in Verlängerung des Segments (13) angeordnet sind,
- wenigstens eine Hinterschneidung (21) für den Eingriff des mindestens einen Rastorgans (19) eines benachbarten Segments (13) und
- einen im Übergangsbereich (27) liegenden und an die Hinterschneidung (21) anschliessenden zur Segmentachse parallelen, kreiszylindrischen Mantelbereich (29),
**dadurch gekennzeichnet, dass** die erste und zweite Dichtflächen (25, 30) als in Segmentachsrichtung (23) gekrümmte Flächen mit im Wesentlichen gleichen Krümmungsradien ausgeführt sind.

2. Rohrsegment nach dem vorhergehenden Anspruch **dadurch gekennzeichnet, dass** das oder die Rastorgane (19) in Umfangsrichtung um vorzugsweise gleiche Winkelabstände zueinander versetzte, elastische, nasenförmige Haken (20) aufweisen.

3. Rohrsegment nach dem vorhergehenden Anspruch **dadurch gekennzeichnet, dass** der nasenförmige Haken (20) eine Stosszone (55) besitzt, welche sich in einem spitzen Winkel in Bezug auf die Segmentlängsachse zum Ende des Rastorgans hin verjüngt.

4. Rohrsegment nach einem der vorhergehenden Ansprüche **dadurch gekennzeichnet, dass** Rastorgan (19) und Hinterschneidung (21) an jeweils entgegengesetzten Segmentseiten, d.h. der Segmentinnenseite und der Segmentaussenseite, angeordnet sind, sodass im eingerasteten Zustand Rastorgan und Hinterschneidung zweier benachbarter Segmente (13,13') ineinander eingerastet sind.

5. Rohrsegment nach einem der vorhergehenden Ansprüche, **dadurch gekennzeichnet, dass** die Kreismittelpunkte der Krümmungsradien der Dichtflächen (25, 30) im Wesentlichen auf der Segmentachse liegen.

6. Rohrsegment nach einem der vorhergehenden Ansprüche **dadurch gekennzeichnet, dass** die erste Dichtfläche (15) eine konkav gekrümmte Fläche bildet und die zweite Dichtfläche (17) eine konvex gekrümmte Flächen bildet.

7. Rohrsegment nach einem der vorhergehenden Ansprüche **dadurch gekennzeichnet, dass** der Übergangsbereich (27) mittels zunehmendem Durchmesser den zweiten Segmentbereich (17) in den ersten Segmentbereich (15) überleitet und/oder dass die Hinterschneidung (21) zwischen dem zweiten Segmentbereich (17) und dem Übergangsbereich (27) liegt.

8. Rohrsegment nach einem der vorhergehenden Ansprüche **dadurch gekennzeichnet, dass** der Übergangsbereich (27) Unterabschnitte aufweist, wobei ein erster Unterabschnitt aus dem kreiszylindrischen Mantelbereich (29), ein anschliessender zweiter Unterabschnitt aus einem sich zum ersten Segmentbereich hin radial weitenden Mantelbereich (47) mit einem ersten Neigungswinkel und optional ein dem zweiten Unterabschnitt anschliessender dritter Unterabschnitt aus einem sich zum ersten Segmentbereich hin radial weitenden Mantelbereich (49) mit einem zweiten Neigungswinkel besteht.

9. Rohrsegment nach den vorhergehenden Ansprüchen 3 und 8 **dadurch gekennzeichnet, dass** der spitze Winkel der Stosszone (55) des Hakens (20) gleich dem ersten Neigungswinkel ist.

10. Rohrsegment nach einem der zwei vorhergehenden Ansprüche **dadurch gekennzeichnet, dass** der zweite Neigungswinkel grösser als der ersten Neigungswinkel ist.

11. Rohrsegment nach einem der vorhergehenden Ansprüche **dadurch gekennzeichnet, dass** die erste Dichtfläche (25) einen Kreisbogen zwischen Rastorgan (19) und Übergangsbereich (27) beschreibt, wobei der von der Segmentachse (23) am weitesten entfernte Punkt des Bogens im mittleren Bogenbereich liegt.

12. Rohrsegment nach einem der vorhergehenden Ansprüche **dadurch gekennzeichnet, dass** die zweite gekrümmte Dichtfläche (30) einen Kreisbogen zwischen Segmentanfang des zweiten Segmentbereichs (17) und der Hinterschneidung (21) beschreibt, wobei der von der Segmentachse (23) am weitesten entfernte Punkt des Bogens im mittleren Bogenbereich liegt.

13. Rohrsegment nach einem der vorhergehenden Ansprüche **dadurch gekennzeichnet, dass** die Rastorgane (19) als einzelne Abschnitte ausgebildet sind, die das Rohrsegment, bevorzugt vom ersten Segmentbereich (15) aus, in Achsrichtung eine bestimmte Distanz überragen.

14. Rohrsegment nach einem der vorhergehenden Ansprüche **dadurch gekennzeichnet, dass** im Bereich einer der Dichtflächen eine Ringnut (43) für die Aufnahme eines Dichtungsringes (39) vorgesehen ist.

15. Schutzrohr oder Schutzrohrabschnitt (11) beinhaltend ineinander eingerastete Rohrsegmente (13,13') nach einem der vorhergehenden Ansprüchen mit einer axialen und einer uneingeschränkt rotatorischen Beweglichkeit der Rastorgane (19) eines benachbarten Segmentes (13') in Bezug auf Achse und Umfang des Rohrsegments (13).
